# DEMANDE DE BREVET EUROPEEN

(11) **EP 4 254 593 A1**
(43) Date de publication de la demande: **04.10.2023**
(21) Numéro de dépôt: 22305416.4
(22) Date de dépôt: 31.03.2022
(51) Int. Cl.: H01M 10/42, H01M 10/613, H01M 10/625, H01M 10/647, H01M 10/6554, H01M 10/6556, H01M 50/209, H01M 50/249, H01M 50/502, H01M 50/289

(54) **BATTERIE ET PROCÉDÉ D ASSEMBLAGE ASSOCIÉ**

(71) Demandeur: Automotive Cells Company SE, 92300 Levallois Perret (FR)
(72) Inventeur: CHAUVEAU, Pierre, 33520 BRUGES (FR); MATHIEU, Alexandre, 33300 BORDEAUX (FR); BOOS, Gwenaelle, 33320 EYSINES (FR); MARATHE, Dimitri, 33140 VILLENAVE D'ORNON (FR)
(74) Mandataire: Lavoix

(57) **Abrégé**

L'invention concerne une batterie comprenant au moins deux ensembles (16), chacun des deux ensembles (16) comprenant une pluralité de cellules électrochimiques (18) et une plaque centrale (20), les cellules électrochimiques (18) de chacun des deux ensembles (16) comprenant un premier groupe (34) de cellules électrochimiques et un deuxième groupe (36) de cellules électrochimiques séparés l'un de l'autre selon la direction transversale (Y) par la plaque centrale (20),
Chacun des ensembles (16) est mobile entre une configuration d'usage dans laquelle le premier groupe (34) et le deuxième groupe (36) de cellules électrochimiques sont connectés électriquement entre eux et une configuration de maintenance dans laquelle le premier groupe (34) et le deuxième groupe (36) de cellules électrochimiques sont déconnectés électriquement entre eux, chacun du premier groupe (34) et du deuxième groupe (36) de cellules électrochimiques ayant une tension inférieure à 60 V.

## Description

La présente invention concerne une batterie, en particulier pour un véhicule au moins partiellement alimenté par batterie électrique.

L'invention s'applique en particulier à la réalisation d'une batterie, notamment de véhicule électrique. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s) de batterie, chaque module de batterie comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Cependant, de tels modules de cellules posent un problème de sécurité notamment pendant les opérations de maintenance de la batterie.

En effet, au cours des opérations de maintenance, par exemple une opération de remplacement d'une des cellules d'un module, ledit module est déconnecté du reste de la batterie et est ensuite manipulé individuellement.

Cependant, en raison du grand nombre de cellules constituant un module, la tension totale du module est élevée, par exemple supérieure à 60 V. En conséquence, la manipulation de chaque module requiert des précautions particulières, notamment le port d'équipements de protection individuelle, comme des gants par exemple, afin d'éviter un risque d'électrisation de l'opérateur. Ceci complexifie les opérations de maintenance de la batterie.

Un des buts de l'invention est de faciliter la maintenance d'une batterie tout en garantissant la sécurité de l'utilisateur.

A cet effet, l'invention a pour objet une batterie comprenant au moins deux ensembles s'étendant successivement selon une direction longitudinale,
chacun des deux ensembles comprenant une pluralité de cellules électrochimiques s'étendant successivement selon une direction transversale perpendiculaire à la direction longitudinale, et une plaque centrale s'étendant perpendiculairement à la direction transversale,
les cellules électrochimiques de chacun des deux ensembles comprenant un premier groupe de cellules électrochimiques connectées électriquement entre elles et un deuxième groupe de cellules électrochimiques connectées électriquement entre elles, le premier groupe et le deuxième groupe étant séparés l'un de l'autre selon la direction transversale par la plaque centrale,
la plaque centrale de chacun des deux ensembles comprenant une première face et une deuxième face opposées l'une de l'autre selon la direction longitudinale,
chacun des ensembles étant mobile entre une configuration d'usage dans laquelle le premier groupe de cellules électrochimiques et le deuxième groupe de cellules électrochimiques sont connectés électriquement entre eux et une configuration de maintenance dans laquelle le premier groupe de cellules électrochimiques et le deuxième groupe de cellules électrochimiques sont déconnectés électriquement entre eux, chacun du premier groupe de cellules électrochimiques et du deuxième groupe de cellules électrochimiques ayant une tension inférieure à 60 V.

Selon des modes particuliers de réalisation, la batterie comprend l'une ou plusieurs des caractéristiques optionnelles suivantes, prise(s) isolément ou selon toutes les combinaisons techniquement possibles :
- chacun des ensembles comprend au moins une pièce de liaison fixée de manière amovible sur la plaque centrale, chacun du premier groupe de cellules électrochimiques et du deuxième groupe de cellules électrochimiques est connecté électriquement à la pièce de liaison par l'intermédiaire d'une pièce de connexion, lorsque l'ensemble est en configuration d'usage ;
- la première face de la plaque centrale comprend au moins un pion de fixation, la deuxième face de la plaque centrale définissant au moins un orifice de fixation, la plaque centrale de l'un des deux ensembles étant dans le prolongement longitudinal de la plaque centrale de l'autre des deux ensembles, le pion de fixation de l'un des deux ensembles étant inséré dans l'orifice de fixation de l'autre des deux ensembles ;
- la première face de la plaque centrale comprend l'un d'un deuxième pion de fixation et d'un deuxième orifice de fixation et la deuxième face de la plaque centrale comprend l'autre d'un deuxième pion de fixation et d'un deuxième orifice de fixation ;
- l'au moins un des orifices de fixation de la plaque centrale est de forme oblongue ;
- la batterie comprend au moins une traverse s'étendant selon la direction transversale, la traverse étant intercalés longitudinalement entre les deux ensembles selon la direction longitudinale ;
- la traverse comprend au moins un orifice de passage traversé par le pion de fixation de la plaque centrale correspondante ;
- la plaque centrale comprend une troisième face et une quatrième opposées l'une de l'autre selon une troisième direction perpendiculaire à la direction longitudinale et à la direction transversale, la troisième face de la plaque centrale délimitant entre une des cellules électrochimiques du premier groupe de cellules électrochimiques et une des cellules électrochimiques du deuxième groupe de cellules électrochimiques un logement situé du côté opposé au fond ;
- la batterie comprend des connecteurs électriques fixés sur la troisième face de la plaque centrale dans le logement ;
- au moins un des connecteurs électriques est une barre d'interconnexion ;
- la plaque centrale comprend un circuit de refroidissement intégré définissant au moins un passage destiné à être parcouru par un fluide de refroidissement.

L'invention a aussi pour objet un procédé d'assemblage d'une batterie telle que décrite précédemment comprenant au moins les étapes suivantes :
- une étape d'assemblage de chacun des deux ensembles, et
- une étape d'agencement des deux ensembles de sorte que la plaque centrale de l'un des deux ensembles soit dans le prolongement longitudinal de la plaque centrale de l'autre des deux ensembles.

Selon des modes particuliers de réalisation, le procédé comprend l'une ou plusieurs des caractéristiques optionnelles suivantes, prise(s) isolément ou selon toutes les combinaisons techniquement possibles :
- l'étape d'assemblage de chacun des deux ensembles comprend, la fixation amovible d'une pièce de liaison sur la plaque centrale et pour chacun des groupes, la fixation d'une pièce de connexion sur la pièce de liaison ;
- la plaque centrale comprend une troisième face et une quatrième face opposées l'une de l'autre selon une troisième direction perpendiculaire à la direction longitudinale et à la direction transversale, la troisième face de la plaque centrale délimitant entre une des cellules électrochimiques du premier groupe de cellules électrochimiques et une des cellules électrochimiques du deuxième groupe de cellules électrochimiques un logement situé du côté opposé au fond, le procédé comprenant une étape supplémentaire de fixation de connecteurs électriques sur la troisième face de la plaque centrale dans le logement.

L'invention sera mieux comprise à la lecture de la description qui va suivre, donnée uniquement à titre d'exemple non limitatif, et faite en se référant aux dessins annexés, sur lesquels :
- la figure 1 est une vue schématique en perspective d'une batterie selon l'invention comprenant une pluralité d'ensembles,
- la figure 2 est une vue schématique en perspective d'un ensemble de la batterie représentée sur la figure 1 comprenant des cellules électrochimiques et une plaque centrale,
- la figure 3 est une vue schématique en perspective de la plaque centrale de l'ensemble représenté sur la figure 2,
- la figure 4 est une vue en coupe selon un plan de coupe XZ de la batterie représentée sur la figure 1, et
- la figure 5 est une vue en coupe selon un plan de coupe YZ de la batterie représentée sur la figure 1.

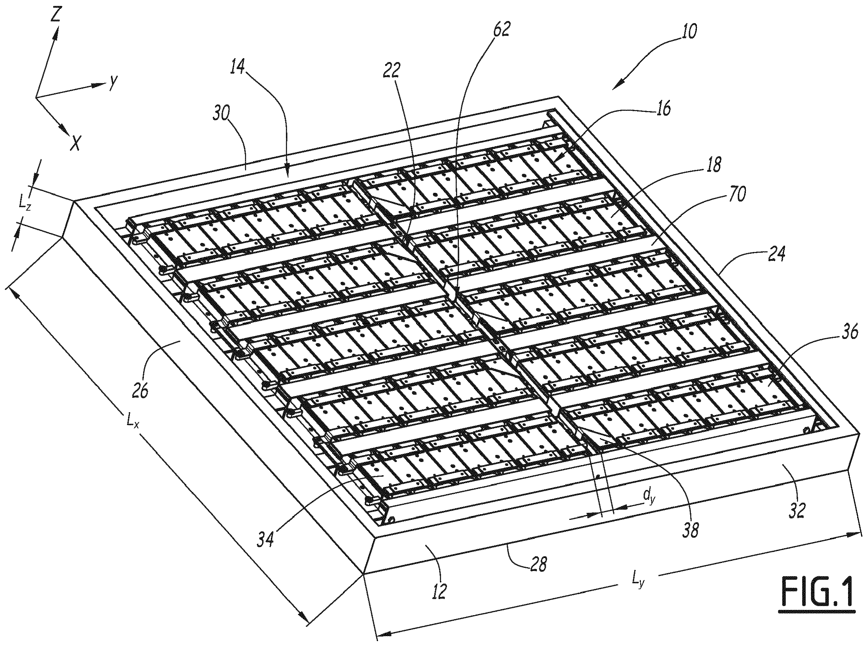

En référence aux figures 1 à 5, on décrit une batterie 10 selon l'invention.

La batterie 10 est par exemple destinée à prendre place dans un véhicule automobile électrique ou hybride (non représenté).

La batterie 10 comprend un boîtier 12 définissant un logement 14 s'étendant dans une direction longitudinale X qui est par exemple la direction d'avancée du véhicule, et dans une direction transversale Y perpendiculaire à la direction longitudinale et qui est par exemple la direction transversale du véhicule.

On définit en outre une troisième direction Z perpendiculaire à la direction longitudinale X et à la direction transversale Y, et qui est par exemple destinée à être sensiblement verticale lorsque le véhicule se situe sur une surface horizontale (non représentée).

La batterie 10 comprend, en outre, au moins deux ensembles 16 s'étendant successivement dans la direction longitudinale X.

La batterie 10 comprend aussi avantageusement des connecteurs électriques 22 disposés entre les ensembles 16 pour connecter les ensembles 16 entre eux.

La batterie 10 comprend aussi par exemple des organes de fixation (non représentés), tels que des vis, pour fixer les ensembles 16 sur le boîtier 12.

De préférence, la batterie 10 comprend en outre au moins une traverse 70 s'étendant dans la direction transversale Y.

Dans l'exemple illustré sur la figure 1, la batterie 10 comprend cinq ensembles 16 et six traverses 70. Quatre des six traverses 70 sont intercalées longitudinalement entre les ensembles 16, et deux traverses 70 sont dites « extrémales » longitudinalement car elles ne longent respectivement qu'un seul des ensembles 16.

Selon d'autres modes de réalisation non représentés, le nombre d'ensembles 16 est de moins de cinq ou de plus de cinq, et le nombre de traverses 70 est de moins de six ou de plus de six.

Le boîtier 12 présente par exemple une forme parallélépipédique, avantageusement aplatie dans la troisième direction Z, car la batterie 10 est par exemple destinée à être intégrée en partie inférieure du véhicule, par exemple sous un habitacle.

Le boîtier 12 définit un premier bord latéral 24 et un deuxième bord latéral 26 opposées l'un à l'autre selon la direction transversale Y. Le boîtier comprend en outre un fond 28, et un troisième bord latéral 30 et un quatrième bord latéral 32 opposés l'un à l'autre dans la direction longitudinale X.

Le boîtier 12 comprend avantageusement un circuit de refroidissement 68, de préférence ménagé dans le fond 28 du boîtier 12.

Le circuit de refroidissement 68 définit par exemple au moins un passage 69 destiné à être parcouru par un fluide de refroidissement, par exemple de l'eau glycolée ou de l'air froid, dans le but de refroidir les ensembles 16 selon la troisième direction Z.

Les connecteurs électriques 22 sont de préférence fixés sur les ensembles 16.

De préférence, au moins un des connecteurs électriques 22 est une barre d'interconnexion (ou barre du bus ou encore « busbar » selon la terminologie anglaise), par exemple en cuivre ou en aluminium, connectant électriquement deux ensembles 16 adjacents entre eux.

Chaque traverse 70 s'étend par exemple dans la direction transversale Y entre le premier bord latéral 24 et le deuxième bord latéral 26 du boîtier 12.

De préférence, la traverse 70 est intercalée longitudinalement entre deux ensembles 16 selon la direction longitudinale X, et avantageusement de sorte qu'il n'existe pas de jeu mécanique entre la traverse 70 et les ensembles 16.

Dans l'exemple illustré sur la figure 1, les traverses 70 et les ensembles 16 sont avantageusement disposés successivement dans le logement 14 les uns contre les autres dans la direction longitudinale X et de manière alternée, de sorte qu'il n'existe pas de jeu mécanique entre les traverses 70 et les ensembles 16, les ensembles 16 et les traverses 70 étant fixés sur le boîtier 12. Ainsi, les traverses 70 sont moins sujettes au flambement en cas de choc latéral (dans la direction transversale Y) sur le véhicule, car elles sont maintenues par les ensembles 16.

Chaque traverse 70 comprend avantageusement au moins un orifice de passage 72 destiné à fixer la traverse 70 à l'un des ensembles 16 comme cela sera décrit par la suite.

Chacun des ensembles 16 comprend une pluralité de cellules électrochimiques 18 s'étendant successivement dans la direction transversale Y et de préférence solidarisées entre elles.

En outre, chacun des ensembles 16 comprend une plaque centrale 20 s'étendant perpendiculairement à la direction transversale Y, les cellules électrochimiques 18 étant situées transversalement de part et d'autre de la plaque centrale 20.

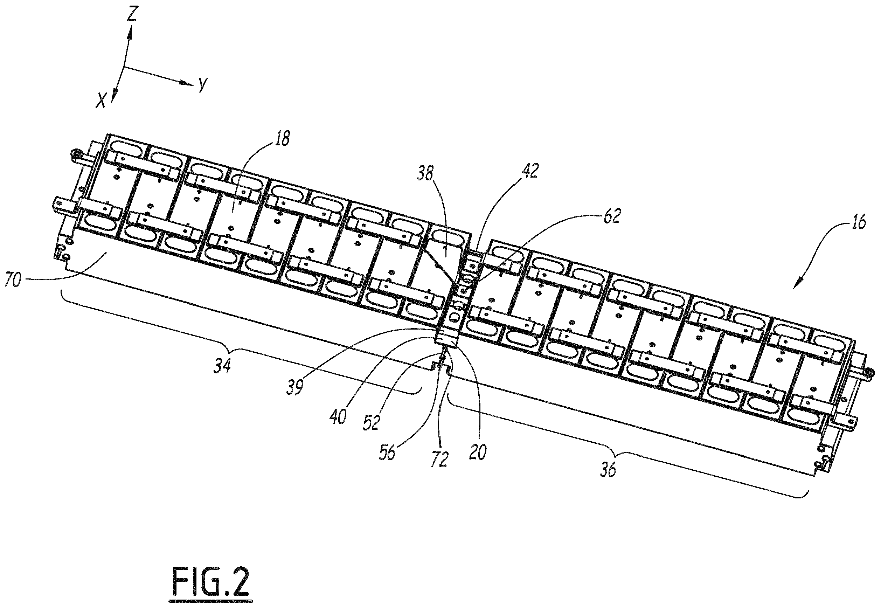

Comme illustré sur la figure 2, chacun des ensembles 16 comprend ainsi un premier groupe 34 de cellules électrochimiques connectées électriquement entre elles et un deuxième groupe 36 de cellules électrochimiques connectées électriquement entre elles, le premier groupe 34 et le deuxième groupe 36 étant séparés l'un de l'autre selon la direction transversale Y par la plaque centrale 20.

Dans l'exemple illustré sur les figures, chacun des ensembles 16 est divisé en deux groupes 34, 36 comportant chacun neufs cellules électrochimiques 18.

Chacun des ensembles 16 est mobile entre une configuration d'usage dans laquelle le premier groupe 34 de cellules électrochimiques et le deuxième groupe 36 de cellules électrochimiques sont connectés électriquement entre eux et une configuration de maintenance dans laquelle le premier groupe 34 de cellules électrochimiques et le deuxième groupe 36 de cellules électrochimiques sont déconnectés électriquement entre eux.

Chacun des ensembles 16 en configuration d'usage a par exemple une tension supérieure à 60 V.

Le tension d'un ensemble 16 correspond à la tension maximale de chacune des cellules 18 multipliée par le nombre de cellules 18.

De préférence, chacun des ensembles 16 comprend au moins une pièce de liaison 39 fixée de manière amovible sur la plaque centrale 20, par exemple par vissage ou clipsage, la pièce de liaison 39 étant apte à connecter électriquement les cellules 18 du premier groupe 34 avec les cellules 18 du deuxième groupe 36.

Avantageusement, chacun du premier groupe 34 de cellules électrochimiques et du deuxième groupe 36 de cellules électrochimiques a une tension inférieure à 60 V, ce qui autorise une manipulation de chacun des groupes 34, 36 en toute sécurité.

Chacun du premier groupe 34 de cellules électrochimiques et du deuxième groupe 36 de cellules électrochimiques est avantageusement connecté électriquement à la pièce de liaison 39 par l'intermédiaire d'une pièce de connexion 38 lorsque l'ensemble 16 est en configuration d'usage. Les deux groupes 34, 36 de cellules électrochimiques sont ainsi reliés électriquement entre eux de sorte à former l'ensemble 16 en configuration d'usage.

La pièce de connexion 38 de chacun des groupes 34, 36 est fixée, par exemple par soudage, à l'une des cellules 18 du groupe 34, 36 correspondant.

De préférence, la pièce de connexion 38 de chacun des groupes 34, 36 est fixée sur la pièce de liaison 39, lorsque l'ensemble 16 est en configuration d'usage.

Il est ainsi facile de déconnecter électriquement chacun des groupes 34, 36 indépendamment du reste de l'ensemble 16 et de la batterie 10, de préférence en déconnectant la pièce de liaison 39 de la plaque centrale 20 L'ensemble 16 est ainsi passé en configuration de maintenance.

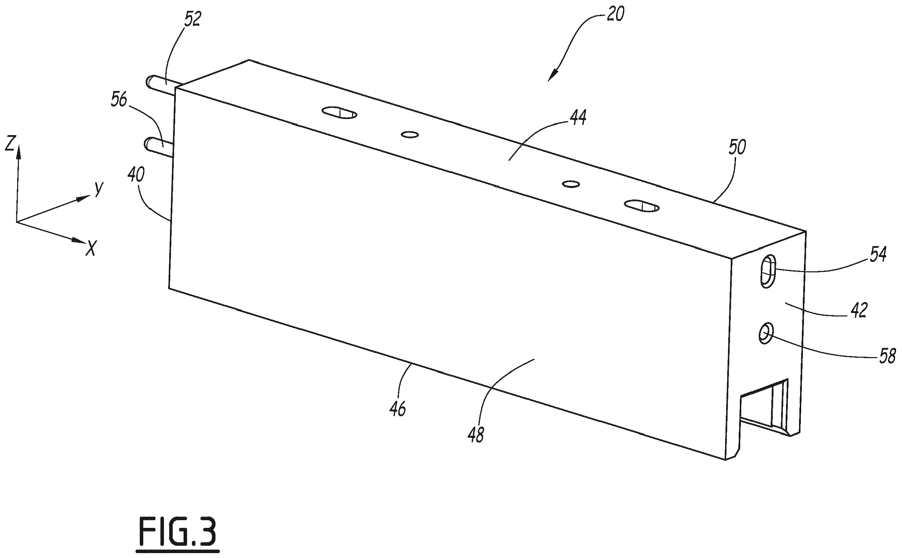

Comme illustré sur la figure 3, la plaque centrale 20 de chacun des ensembles 16 a une forme sensiblement parallélépipédique et comprend une première face 40 et une deuxième face 42 opposées l'une de l'autre selon la direction longitudinale X, une troisième face 44 et une quatrième face 46 opposées l'une de l'autre selon la troisième direction Z et une cinquième face 48 et une sixième face 50 opposées l'une de l'autre selon la direction transversale Y.

La cinquième face 48, respectivement la sixième face 50, de la plaque centrale 20 s'étend contre une des cellules électrochimiques 18 du premier groupe 34, respectivement une des cellules électrochimiques 18 du deuxième groupe 36, de l'ensemble 16 correspondant.

Comme illustré sur les figures 1, lorsque les ensembles 16 sont montés dans le boîtier 12, les plaques centrales 20 des ensembles 16 s'étendent dans le prolongement longitudinal les unes des autres.

En outre, de manière optionnelle, la plaque centrale 20 de chacun des ensembles 16 comprend avantageusement un circuit de refroidissement intégré 64.

Les plaques centrales 20 sont avantageusement adaptées pour résister à des efforts longitudinaux qui leur seraient appliqués par la ou les traverse(s) 70, et contribuent donc à réduire le risque de flambement de la ou des traverse(s) 70 en cas de choc latéral sur le véhicule.

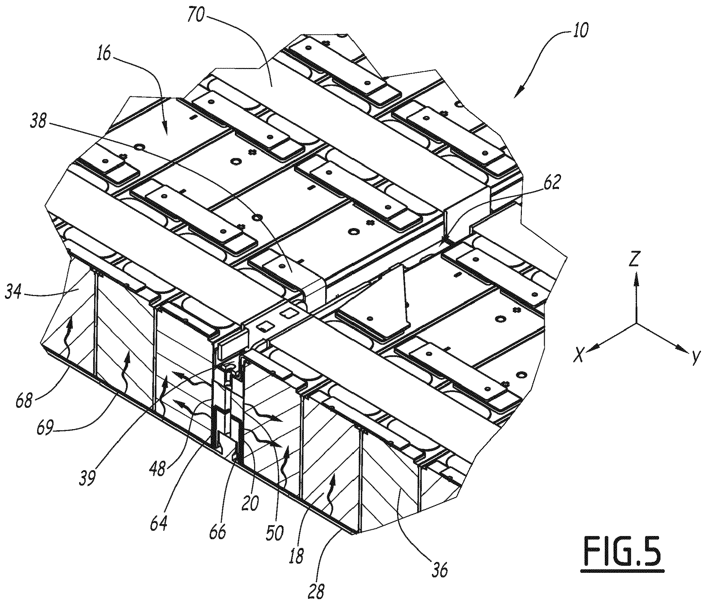

Comme illustré sur la figure 5, la hauteur de la plaque centrale 20 mesurée selon la troisième direction Z entre la troisième face 44 et la quatrième face 46 du boîtier 12 est de préférence inférieure à la hauteur des cellules 18 de l'ensemble 16, la quatrième face 46 s'étendant contre le fond 28 du boîtier 12.

Ainsi, la troisième face 44 de chaque plaque centrale 20 délimite entre une des cellules électrochimiques 18 du premier groupe 34 de cellules électrochimiques et une des cellules électrochimiques 18 du deuxième groupe 36 de cellules électrochimiques un logement 62 situé du côté opposé au fond 28 du boîtier.

Les logements 62 des plaques centrales 20 des ensembles 16 s'étendent de préférence dans le prolongement longitudinal les uns des autres, lorsque les ensembles 16 sont montés dans le boîtier 12.

Avantageusement, la pièce de liaison 39 et des connecteurs électriques 22 sont fixés sur la troisième face 44 des plaques centrales 20 dans les logements 62.

De préférence, dans le cas d'un connecteur électrique 22 qui est une barre de connexion, une première extrémité de la barre d'interconnexion est par exemple fixée sur la troisième face 44 de la plaque centrale 20 dans le logement 62 de l'un des deux ensembles 16 et la deuxième extrémité de la barre d'interconnexion est par exemple fixée sur la troisième face 44 de la plaque centrale 20 dans le logement 62 de l'autre des deux ensembles 16. Avantageusement, la hauteur des logements 62 est adaptée de sorte que les connecteurs électriques 22 et la pièce de liaison 39 soient logés entièrement dans les logements 62, et plus particulièrement ne dépassent pas selon la troisième direction Z.

Comme illustré sur la figure 5, dans chaque plaque centrale 20, le circuit de refroidissement intégré 64 définit au moins un passage 66 destiné à être parcouru par un fluide de refroidissement, par exemple de l'eau glycolée ou de l'air froid. Le passage 66 est par exemple relié au circuit 68 ménagé dans le fond 28 du boîtier 12, et en particulier au passage 69.

Comme cela est schématisé par les flèches sur la figure 5, une telle disposition permet avantageusement de refroidir les cellules électrochimiques 18 de chacun des ensembles 16 selon la troisième direction Z par le circuit 68 dans le fond 28 du boîtier 12 et également transversalement par les circuits 64 intégrés dans les plaques centrales 20.

Selon l'invention, la première face 40 de chaque plaque centrale 20 comprend au moins un pion de fixation 52 s'étendant longitudinalement en saillie de la plaque centrale 20 et la deuxième face 42 de la plaque centrale 20 définit au moins un orifice de fixation 54.

Avantageusement, comme illustré sur la figure 3, la première face 40 de la plaque centrale 20 comprend un deuxième pion de fixation 56 et la deuxième face 42 de la plaque centrale 20 comprend un deuxième orifice de fixation 58.

De préférence, chacun des pions de fixation 52, 56 a été fixé à la plaque centrale 20 par emboitement.

En variante, chacun des pions de fixation 52, 56 a été fixé à la plaque centrale 20 par soudure ou collage.

Chacun des orifices de fixation 54, 58 est ménagé de forme et de dimension correspondantes au(x) pion(s) de fixation 52, 56.

Avantageusement, l'au moins un des orifices de fixation 54 de la plaque centrale 20 est de forme oblongue, et plus particulièrement avec sa grande dimension selon la troisième direction Z.

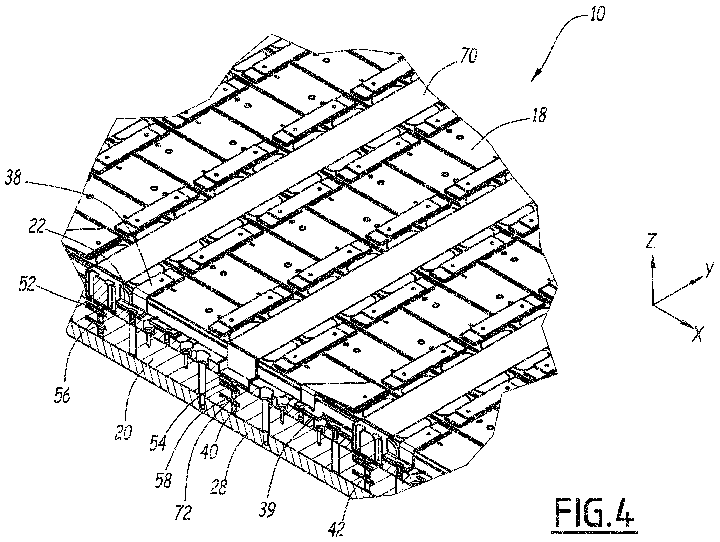

Comme illustré sur la figure 4, deux ensembles 16 adjacents sont fixés entre eux par l'insertion longitudinale du ou des pion(s) de fixation 52, 56 de l'un des deux ensembles 16 dans le ou les orifice(s) de fixation 54, 58 de l'autre des deux ensembles 16, de sorte que la plaque centrale 20 de l'un des deux ensembles 16 est dans le prolongement longitudinal de la plaque centrale 20 de l'autre des deux ensembles 16.

En variante (non-illustrée), la première face 40 comprend un deuxième orifice de fixation 58 et la deuxième face 42 comprend un deuxième pion de fixation 56.

Dans cette variante, lors de la fixation de deux ensembles 16 adjacents, le premier pion de fixation 52 de l'un des deux ensembles 16 est inséré longitudinalement dans le premier orifice de fixation 54 de l'autre des deux ensembles 16 et le deuxième pion de fixation 56 de l'autre des deux ensembles 16 est inséré longitudinalement dans le deuxième orifice de fixation 58 de l'un des deux ensembles 16.

Un procédé d'assemblage de la batterie 10 selon l'invention va maintenant être décrit.

Le procédé comprend une étape d'assemblage de chacun des deux ensembles 16.

A cet effet, un premier groupe 34 de cellules électrochimiques, un deuxième groupe 36 de cellules électrochimiques et une plaque centrale 20 tels que décrit précédemment sont fournis.

La plaque centrale 20 est ensuite disposée de sorte que la cinquième face 48, respectivement la sixième face 50, de la plaque centrale 20 s'étende contre une des cellules électrochimiques 18 du premier groupe 34, respectivement une des cellules électrochimiques 18 du deuxième groupe 36.

De préférence, l'étape d'assemblage comprend la fixation amovible de la pièce de liaison 39 et pour chacun des groupes 34, 36, la fixation de la pièce de connexion 38 sur la pièce de liaison 39, par exemple par vissage ou clipsage, l'ensemble 16 étant ainsi passé en configuration d'usage.

Dans le mode de réalisation préféré de l'invention, le procédé comprend une étape de fourniture d'au moins une traverse 70 et une étape de fixation de celle-ci à l'un des ensembles 16, par exemple par insertion du ou des pion(s) de fixation 52, 56 de la plaque centrale 20 correspondante dans le ou les orifice(s) de passages 72 de la traverse 70.

Le procédé comprend ensuite une étape d'agencement des deux ensembles 16, de sorte que la plaque centrale 20 de l'un des deux ensembles 16 soit dans le prolongement longitudinale de la plaque centrale 20 de l'autre des deux ensembles 16.

A cet effet, le procédé comprend par exemple une étape d'insertion du ou des pion(s) de fixation 52, 56 de l'un des deux ensembles 16 dans l'orifice de fixation 54, 58 de l'autre des deux ensembles 16, suivi d'une étape déplacement de l'un des ensembles 16 est déplacé vers l'autre des deux ensembles 16 selon la direction longitudinale (X), plus particulièrement jusqu'à ce que le ou les pion(s) de fixation 52, 56 soi(en)t complètement inséré(s) dans le ou les orifice(s) de fixation 54, 58.

Ensuite, le procédé comprend avantageusement une étape supplémentaire de fixation des connecteurs électriques 22 sur la troisième face 44 des plaques centrales 20 dans les logements 62.

Grâce aux caractéristiques décrites ci-dessus, la maintenance d'une batterie 10 selon l'invention est facilitée et les risques pour la sécurité de l'utilisateur sont limités.

En effet, chacun des ensembles 16 est facilement séparable électriquement en deux groupes 34, 36 de cellules électrochimiques 18 manipulables indépendamment l'un de l'autre et qui présente chacun une tension inférieure à 60 V, ce qui autorise une manipulation de celui-ci de manière sécuritaire.

Par ailleurs, les plaques centrales 20 selon l'invention permettent de renforcer mécaniquement la batterie 10, et en particulier réduit le risque de flambement de la ou des traverse(s) 70 en cas de choc latéral sur le véhicule.

En outre, ce renforcement mécanique de chaque traverse 70 offre l'avantage de pouvoir installer un ou des traverse(s) 70 de faible épaisseur.

De plus, les logements 62 définis par les plaques centrales 20 permettent d'augmenter la compacité de la batterie 10. En effet, les logements 62 définissent un volume *Lₓ* × *L_{z}* × *d_{y}* (avec *d_{y}* correspondant à la largeur des logements 62) inférieur au volume *Lₓ* × (*L_{y}* - *d_{y}*) × *d_{z}* qui serait nécessaire sur les connecteurs électriques 22 étaient disposés dans une couche de hauteur *d_{z}* au-dessus des cellules 18.

Ces deux avantages permettent ainsi d'augmenter fortement la densité énergétique de la batterie 10.

Par ailleurs, le circuit de refroidissement 64 intégré dans chaque plaque centrale 20 autorise un refroidissement efficace de chacune des cellules électrochimiques 18, et ainsi éviter une surchauffe de la batterie 10.

## Revendications

1. Batterie (10) comprenant au moins deux ensembles (16) s'étendant successivement selon une direction longitudinale (X),
chacun des deux ensembles (16) comprenant une pluralité de cellules électrochimiques (18) s'étendant successivement selon une direction transversale (Y) perpendiculaire à la direction longitudinale (X), et une plaque centrale (20) s'étendant perpendiculairement à la direction transversale (Y),
les cellules électrochimiques (18) de chacun des deux ensembles (16) comprenant un premier groupe (34) de cellules électrochimiques connectées électriquement entre elles et un deuxième groupe (36) de cellules électrochimiques connectées électriquement entre elles, le premier groupe (34) et le deuxième groupe (36) étant séparés l'un de l'autre selon la direction transversale (Y) par la plaque centrale (20),
la plaque centrale (20) de chacun des deux ensembles (16) comprenant une première face (40) et une deuxième face (42) opposées l'une de l'autre selon la direction longitudinale (X),
**caractérisée en ce que** chacun des ensembles (16) est mobile entre une configuration d'usage dans laquelle le premier groupe (34) de cellules électrochimiques et le deuxième groupe (36) de cellules électrochimiques sont connectés électriquement entre eux et une configuration de maintenance dans laquelle le premier groupe (34) de cellules électrochimiques et le deuxième groupe (36) de cellules électrochimiques sont déconnectés électriquement entre eux, chacun du premier groupe (34) de cellules électrochimiques et du deuxième groupe (36) de cellules électrochimiques ayant une tension inférieure à 60 V.

2. Batterie (10) selon la revendication 1, dans laquelle chacun des ensembles (16) comprend au moins une pièce de liaison (39) fixée de manière amovible sur la plaque centrale (20), chacun du premier groupe (34) de cellules électrochimiques et du deuxième groupe (36) de cellules électrochimiques est connecté électriquement à la pièce de liaison (39) par l'intermédiaire d'une pièce de connexion (38), lorsque l'ensemble (16) est en configuration d'usage.

3. Batterie (10) selon la revendication 1 ou 2, dans laquelle la première face (40) de la plaque centrale (20) comprend au moins un pion de fixation (52, 56), la deuxième face (42) de la plaque centrale (20) définissant au moins un orifice de fixation (54, 58), la plaque centrale (20) de l'un des deux ensembles (16) étant dans le prolongement longitudinal de la plaque centrale (20) de l'autre des deux ensembles (16), le pion de fixation (52, 56) de l'un des deux ensembles (16) étant inséré dans l'orifice de fixation (54, 58) de l'autre des deux ensembles (16).

4. Batterie (10) selon la revendication 3, dans laquelle la première face (40) de la plaque centrale (20) comprend l'un d'un deuxième pion de fixation (56) et d'un deuxième orifice de fixation (58) et la deuxième face (42) de la plaque centrale (20) comprend l'autre d'un deuxième pion de fixation (56) et d'un deuxième orifice de fixation (58).

5. Batterie (10) selon la revendication 3 ou 4, dans laquelle l'au moins un des orifices de fixation (54) de la plaque centrale (20) est de forme oblongue.

6. Batterie (10) selon l'une quelconque des revendications précédentes, comprenant au moins une traverse (70) s'étendant selon la direction transversale (Y), la traverse (70) étant intercalés longitudinalement entre les deux ensembles (16) selon la direction longitudinale (X).

7. Batterie (10) selon les revendications 3 et 6 combinées, dans laquelle la traverse (70) comprend au moins un orifice de passage (72) traversé par le pion de fixation (52, 56) de la plaque centrale (20) correspondante.

8. Batterie (10) selon l'une quelconque des revendications précédentes, dans laquelle la plaque centrale (20) comprend une troisième face (44) et une quatrième face (46) opposées l'une de l'autre selon une troisième direction (Z) perpendiculaire à la direction longitudinale (X) et à la direction transversale (Y), la troisième face (44) de la plaque centrale délimitant entre une des cellules électrochimiques (18) du premier groupe (34) de cellules électrochimiques et une des cellules électrochimiques (18) du deuxième groupe (36) de cellules électrochimiques un logement (62) situé du côté opposé au fond (28).

9. Batterie (10) selon la revendication 8, comprenant des connecteurs électriques (22) fixés sur la troisième face (44) de la plaque centrale (20) dans le logement (62).

10. Batterie (10) selon la revendication 9, dans laquelle au moins un des connecteurs électriques (22) est une barre d'interconnexion.

11. Batterie (10) selon l'une quelconque des revendications précédentes, dans laquelle la plaque centrale (20) comprend un circuit de refroidissement intégré (64) définissant au moins un passage (66) destiné à être parcouru par un fluide de refroidissement.

12. Procédé d'assemblage d'une batterie (10) selon l'une des revendications précédentes comprenant au moins les étapes suivantes:
- une étape d'assemblage de chacun des deux ensembles (16), et
- une étape d'agencement des deux ensembles (16) de sorte que la plaque centrale (20) de l'un des deux ensembles (16) soit dans le prolongement longitudinal de la plaque centrale (20) de l'autre des deux ensembles (16).

13. Procédé selon la revendication 12, dans lequel l'étape d'assemblage de chacun des deux ensembles comprend, la fixation amovible d'une pièce de liaison (39) sur la plaque centrale (20) et pour chacun des groupes (34, 36), la fixation d'une pièce de connexion (38) sur la pièce de liaison (39).

14. Procédé selon la revendication 12 ou 13, dans lequel la plaque centrale (20) comprend une troisième face (44) et une quatrième face (46) opposées l'une de l'autre selon une troisième direction (Z) perpendiculaire à la direction longitudinale (X) et à la direction transversale (Y), la troisième face (44) de la plaque centrale (20) délimitant entre une des cellules électrochimiques (18) du premier groupe (34) de cellules électrochimiques et une des cellules électrochimiques (18) du deuxième groupe (36) de cellules électrochimiques un logement (62) situé du côté opposé au fond (28), le procédé comprenant une étape supplémentaire de fixation de connecteurs électriques (22) sur la troisième face (44) de la plaque centrale (20) dans le logement (62).
